# FASCICULE DE BREVET EUROPEEN

(11) **EP 2 045 515 B1**
(45) Date de publication et mention de la délivrance du brevet: **09.11.2016**
(21) Numéro de dépôt: 08165674.6
(22) Date de dépôt: 02.10.2008
(51) Int. Cl.: F21V 7/00, F21S 8/10, F21S 8/12, F21W 101/10, F21W 101/14, F21Y 115/10

(54) **Dispositif d'éclairage ou de signalisation pour véhicule automobile**
Vorrichtung zur Beleuchtung oder Signalisierung für Kraftfahrzeuge
Lighting or signalling device for an automobile

(30) Priorité: 04.10.2007 FR 0706982
(43) Date de publication de la demande: 08.04.2009
(73) Titulaire: VALEO VISION, 93012 Bobigny (FR)
(72) Inventeur: De Lamberterie, Antoine, 75019 Paris (FR)

(56) Documents cités:
- EP-A- 1 630 576
- WO-A-2006/033040
- WO-A-2007/040527
- DE-A1-102005 019 093
- FR-A- 2 769 971
- US-A1- 2006 087 860

## Description

L'invention est relative à un dispositif d'éclairage ou de signalisation, pour véhicule automobile, comportant au moins une source lumineuse et au moins un guide des rayons lumineux entre la source et une face de sortie.Des dispositifs d'éclairage ou de signalisation de ce type sont connus, notamment d'après la demande de brevet WO 2006/096467. Ce document divulgue un dispositif d'éclairage qui comporte un guide des rayons sous forme de pièces massives d'une réalisation délicate et coûteuse. Les performances en portée sont diminuées en raison d'une collimation moyennement satisfaisante. En outre, les dimensions de l'ensemble sont relativement importantes. Un autre dispositif est connu du document WO 2007/040527.

L'invention a pour but, surtout, de fournir un dispositif d'éclairage ou de signalisation du genre défini précédemment dont la compacité soit réduite, surtout en largeur, et dont les performances soient améliorées. Il est aussi recherché que la faisabilité industrielle du dispositif soit assurée, notamment pour un moulage des pièces du dispositif. Il est également souhaitable que le dispositif soit d'une grande souplesse quant aux sources lumineuses qui peuvent être utilisées.

Selon l'invention, un dispositif d'éclairage ou de signalisation, pour véhicule automobile, est défini de la façon suivante :
Il présente un axe optique et il comporte au moins une source lumineuse et au moins un guide des rayons lumineux entre la source et une face de sortie, le guide présentant une tranche d'entrée associée à la source,
   et :
   - le guide des rayons lumineux est formé par une nappe,
   - et la nappe comporte un bord arrière courbe convexe vers l'arrière, propre à assurer une réflexion des rayons lumineux vers la face de sortie,
la forme courbe du bord arrière étant associée au profil de la face de sortie pour que les rayons lumineux sortants aient une direction contenue dans un plan substantiellement horizontal contenant l'axe optique dudit dispositif.

Ici et dans tout le présent texte, on comprend par « horizontal », « vertical », « oblique, « haut », « bas » et tout autre terme relatif à une indication de positionnement, par des indications se rapportant au dispositif ou à l'un de ses composants, le dispositif étant en position de montage dans le véhicule (ce dispositif peut être un module indépendant d'éclairage ou de signalisation destiné à être implanté directement dans le véhicule, il peut aussi être intégré dans un projecteur ou un feu, eux même destinés à être implantés dans un véhicule). Ces indications clarifient le positionnement des différents composants selon l'invention, sans pour autant que l'invention y soit limitée au sens strict.

De même, dans tout le présent texte, les termes « avant » et « arrière » sont à comprendre en considérant le sens de propagation de la lumière sortant du dispositif d'éclairage vers l'avant.

On comprend aussi par « tranche d'entrée (Ne) associée à la source » le fait que la source puisse être directement appliquée contre ou à proximité immédiate de la tranche d'entrée. Mais cette expression inclut également des configurations où la source n'est pas en contact direct avec la tranche, notamment la configuration où l'on prévoit d'interposer au moins un composant optique de type collecteur ou simple conduit de lumière entre la source et la tranche, par exemple pour améliorer/augmenter la quantité de lumière pénétrant dans la nappe par cette tranche en limitant d'avantage les fuites de lumière, et/ou pour se réserver la possibilité de déporter la source, pour des raisons d'encombrement ou autres.
A noter que ce collecteur peut être venu de matière avec la tranche d'entrée.

Avantageusement, la nappe est comprise entre deux grandes faces parallèles entre elles. On comprend par cela que la nappe a de préférence une épaisseur substantiellement constante. Les faces de la nappe peuvent être planes ou courbes.

De préférence, la face de sortie (B) s'étend transversalement à, ou obliquement par rapport à la tranche d'entrée (Ne).

La tranche d'entrée peut être plane ou non, notamment courbe.

La source lumineuse peut présenter une grande dimension qui est disposée perpendiculairement à la direction longitudinale de la tranche d'entrée, l'épaisseur de la nappe étant au moins égale à la grande dimension de la source pour la recouvrir complètement. Ce cas de figure concerne, de préférence, plus particulièrement le cas où la surface émittrice de la source lumineuse est de type rectangulaire

La source lumineuse peut être une LED formée par l'association de plusieurs puces émettrices de type LED, notamment alignées sensiblement perpendiculairement à la direction longitudinale de la tranche d'entrée.

De préférence, la face de sortie est située dans un plan orthogonal à la tranche d'entrée et le bord arrière a une forme parabolique admettant un foyer situé sur la source lumineuse.

La nappe peut être plane. Elle peut notamment être disposée verticalement ou encore horizontalement ou de façon oblique.

Le dispositif peut comporter un embout prolongeant la face de sortie et présentant, en section par un plan parallèle à la tranche d'entrée, une forme convexe de lentille convergente permettant de collimater au moins partiellement la lumière dans un plan parallèle à la tranche d'entrée.

Le dispositif peut comprendre plusieurs nappes accolées, les nappes étant jointives au-dessus de la source, et s'écartant progressivement pour permettre de juxtaposer des embouts de sortie. Avantageusement, le dispositif comprend trois nappes accolées, à savoir une nappe centrale plane comprise entre deux nappes latérales limitées par des portions de surfaces sphériques.

Lorsque la tranche d'entrée de la nappe est dans un plan horizontal et la face de sortie est verticale, le foyer du bord arrière parabolique est situé sur le bord arrière de la source de sorte que les rayons sortants sont horizontaux ou se dirigent vers le bas au-dessous d'une ligne de coupure.

Le profil de la face de sortie peut être convexe vers l'avant tandis que le profil du bord arrière est associé pour une sortie des rayons parallèle à l'axe. En particulier, le profil de la face de sortie peut être elliptique convexe vers l'avant, tandis que le bord arrière est convexe vers l'arrière en forme d'arc d'hyperbole dont un premier foyer est confondu avec le foyer du profil elliptique et dont le deuxième foyer correspond à l'image virtuelle du premier foyer donnée par le bord arrière.

La nappe peut comporter une ouverture traversante à contour fermé, limitée dans sa partie inférieure par une tranche parabolique dont le foyer est situé au point où est placée la source lumineuse, et dont l'axe géométrique est confondu avec l'axe optique du dispositif, le profil supérieur de l'ouverture étant choisi de manière à pouvoir être contourné par les rayons lumineux émis vers l'arrière, et, pour assurer une double réflexion interne des rayons se dirigeant vers l'arrière, le bord arrière de la nappe comporte une première partie à réflexion totale et une deuxième partie également à réflexion totale renvoyant les rayons parallèlement à la tranche d'entrée.

Avantageusement, la première partie du bord arrière de la nappe est formée par une parabole secondaire dont le foyer est confondu avec celui de la tranche parabolique, mais dont l'axe est dirigé vers le haut, tandis que la deuxième partie du bord arrière est formée par une face supérieure droite.

De préférence, l'angle sous lequel le bord arrière de la nappe est vu depuis la source lumineuse s'étend de part et d'autre de la normale à la source au moins selon un angle égal ou supérieur à 30, 35 ou 40° (et de préférence d'au plus 50 à 60°, afin de ne pas avoir à augmenter la taille de la nappe).Selon une variante, on interpose entre la source (S° et la tranche d'entrée (Ne) de la nappe au moins un élément optique (Co) du type conduit optique, collecteur optique. Cet (ou ces) élément(s) va(vont) donc conduire la lumière de la source dans la nappe, et devenir ainsi une source lumineuse secondaire.L'invention consiste, mises à part les dispositions explosées ci-dessus, en un certain nombre d'autres dispositions dont il sera plus explicitement question ci-après à propos d'exemples de réalisation décrits avec référence aux dessins annexés, mais qui ne sont nullement limitatifs. Sur ces dessins :
Fig. 1 est une vue schématique en perspective, de trois-quarts avant droite, d'un dispositif d'éclairage et de signalisation selon l'invention.
Fig. 2 est une vue partielle de dessus, de la nappe de guidage et de la source lumineuse disposée au-dessous de cette nappe.
Fig. 3 est une vue de côté du dispositif de Fig. 1 à plus petite échelle.
Fig. 4 est une section horizontale partielle, à plus grande échelle, suivant la ligne IV-IV de Fig. 3.
Fig. 5 est un réseau de courbes isolux obtenu avec un premier embout de sortie du dispositif d'éclairage selon Fig. 1,
Fig. 6 est un réseau de courbes isolux obtenu avec un embout de sortie plus épais que dans le cas de Fig. 5.
Fig. 7 est un réseau de courbes isolux obtenu avec un dispositif d'éclairage dont la nappe présente une épaisseur plus faible que pour les Fig. 5 et 6.
Fig. 8 est un réseau de courbes isolux pour un dispositif d'éclairage ayant même épaisseur de nappe que sur Fig. 7, mais dont la face de sortie a une forme différente, complexe.
Fig. 9 est une vue de dessus d'un dispositif d'éclairage avec trois nappes.
Fig. 10 est une vue en bout du dispositif de Fig. 9.
Fig. 11 est un réseau de courbes isolux obtenu avec un dispositif selon Fig. 9 et 10.
Fig. 12 est une vue de côté, à plus grande échelle que Fig. 3, illustrant la formation d'un faisceau à coupure.
Fig. 13 est une vue de côté schématique d'un dispositif dont la face de sortie est convexe vers l'extérieur.
Fig. 14 est une vue de côté d'une variante de réalisation du dispositif selon l'invention assurant deux réflexions internes pour des rayons lumineux émis vers l'arrière.
Fig. 15 est un réseau de courbes isolux obtenu avec le dispositif de Fig. 14,
Fig. 16 est une vue de côté d'un dispositif d'éclairage selon Fig. 14, qui permet d'obtenir un faisceau à coupure, une partie de ce faisceau ayant subi deux réflexions internes dans le dispositif
Fig. 17 est une vue de côté d'une variante du dispositif représenté à la figure 3, et
Fig. 18 est une vue selon un plan perpendiculaire de la variante de dispositif selon la figure 17.

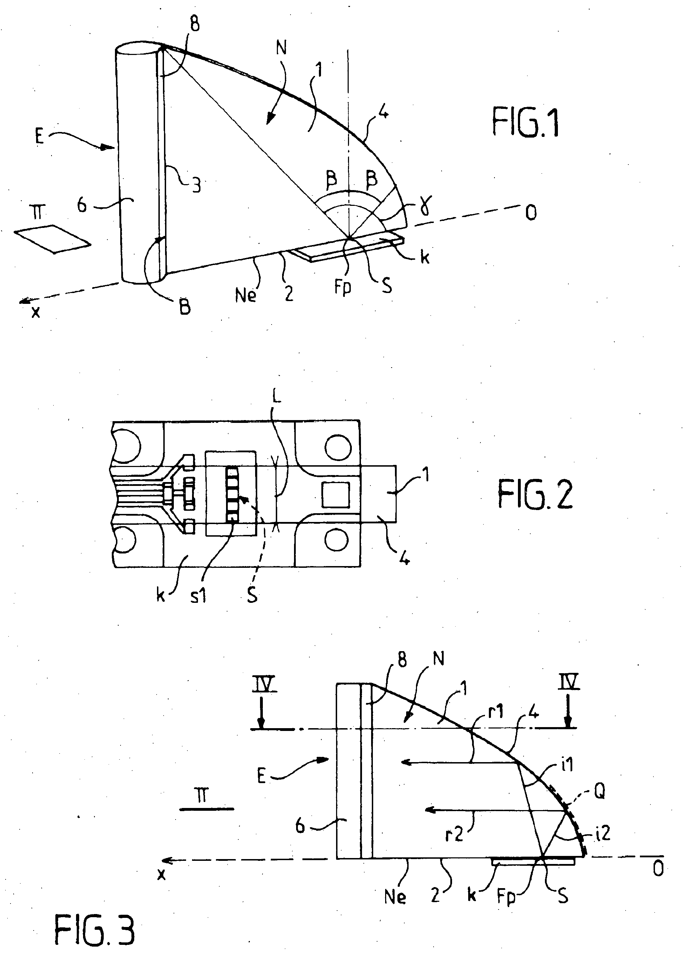

En se reportant à Fig. 1, on peut voir un dispositif d'éclairage ou de signalisation E, pour véhicule automobile, qui comporte au moins une source lumineuse S et au moins un guide N des rayons lumineux entre la source S et une face de sortie B. Le guide N, en matière transparente, présente une tranche d'entrée Ne appliquée contre la source S.

Selon l'invention, le guide N est formée par une nappe 1, ou plaque, comprise entre deux grandes faces parallèles délimitées par un contour à trois côtés, respectivement un côté 2 s'étendant suivant le bord longitudinal de la tranche d'entrée Ne, un côté 3 s'étendant le long de la face de sortie B et un bord arrière 4 courbe convexe. La face de sortie B s'étend transversalement à la tranche d'entrée Ne. Le bord arrière 4 s'étend entre les extrémités éloignées de la tranche d'entrée Ne et de la face de sortie B.

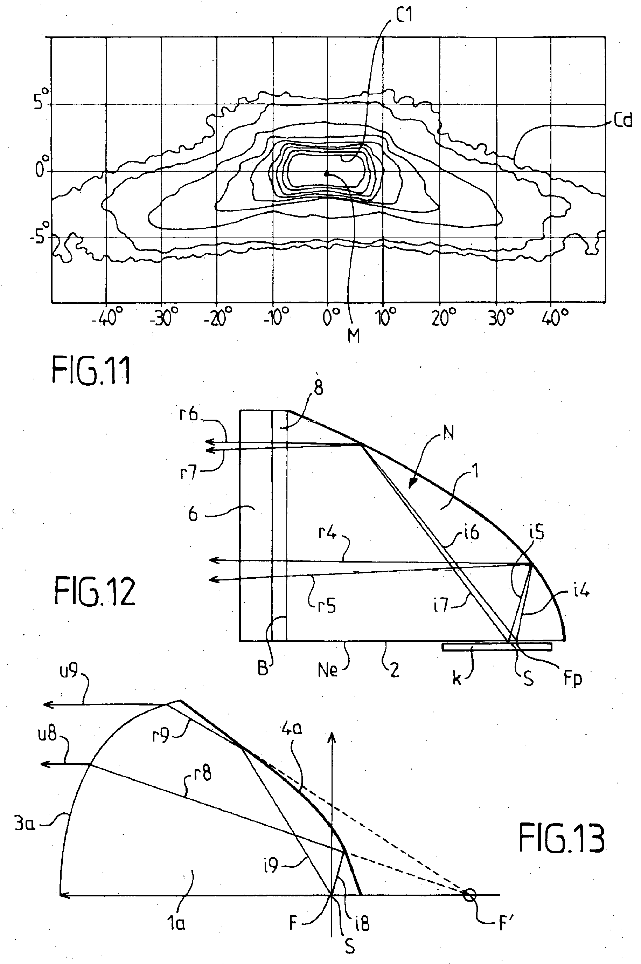

Dans l'exemple considéré, la tranche d'entrée Ne est rectiligne, située dans un plan horizontal, la nappe 1 est verticale et la face de sortie B est orthogonale à la tranche d'entrée Ne. Cet exemple n'est pas limitatif, la face de sortie B pouvant notamment être convexe vers l'avant comme expliqué plus loin à propos de Fig. 13.

En variante, la nappe 1 pourrait être horizontale ainsi que la face de sortie B, ou inclinée sur le plan horizontal. Dans cette configuration, on a alors intérêt à disposer la source de façon à ce que sa plus grande dimension soit cette fois disposée sensiblement parallèlement à la tranche d'entrée Ne, et non plus sensiblement perpendiculairement. La tranche pourra alors être moins épaisse, car correspondant cette fois à la plus petite dimension de la source.

La nappe 1 a une épaisseur constante L (Fig.2) correspondant à la largeur de la tranche d'entrée Ne et de la face de sortie B.

La forme courbe du bord arrière 4 est associée au profil de la face de sortie B pour que les rayons lumineux sortants aient une direction essentiellement parallèle à la tranche d'entrée Ne, le but recherché étant d'avoir une direction des rayons qui soit contenue dans le plan horizontal π contenant l'axe optique (Ox)

Dans l'exemple de Fig. 1, la face de sortie B est plane, orthogonale à la tranche d'entrée Ne. Le bord arrière 4 est alors formé par un arc de parabole dont l'axe géométrique est parallèle au plan π, et est, dans cet exemple, parallèle à la grande dimension de Ne. Le foyer Fp de la parabole du bord arrière 4 est situé sur la tranche Ne vers l'arrière. Le centre, ou un autre point, de la source S est placé au foyer Fp. La source S est de préférence constituée par au moins une diode électroluminescente désignée en abrégé par LED, avantageusement munie d'une plaque protectrice plane (C'est en effet le type de LED le plus adapté quand on doit l'accoler à la tranche Ne elle-même plane. Mais on peut aussi utiliser des LEDs dont la surface émittrice est protégée par un dôme par exemple). La source S (sa surface émittrice) a généralement, dans cet exemple, une forme allongée, rectangulaire ; son grand côté est disposé orthogonalement au plan moyen de la nappe 1, comme visible sur Fig. 2. Dans l'exemple de Fig.2, la source lumineuse S est formée par cinq puces carrées s1 alignées, d'un côté de 1 mm. L'épaisseur L de la plaque 1 est légèrement supérieure à la plus grande dimension de la source lumineuse, soit dans ce cas légèrement supérieure à 5 mm. La source S est disposée sur une plaque support k comportant un circuit imprimé pour les connexions de la LED.

Une configuration optimale consiste d'une part à accoler au plus près la couche protectrice des LED et la tranche d'entrée Ne du guide N, avec éventuellement contact et, d'autre part, à orienter la grande dimension de la source lumineuse suivant l'épaisseur de la nappe 1, dans le cas représenté où la nappe est orientée substantiellement verticalement.

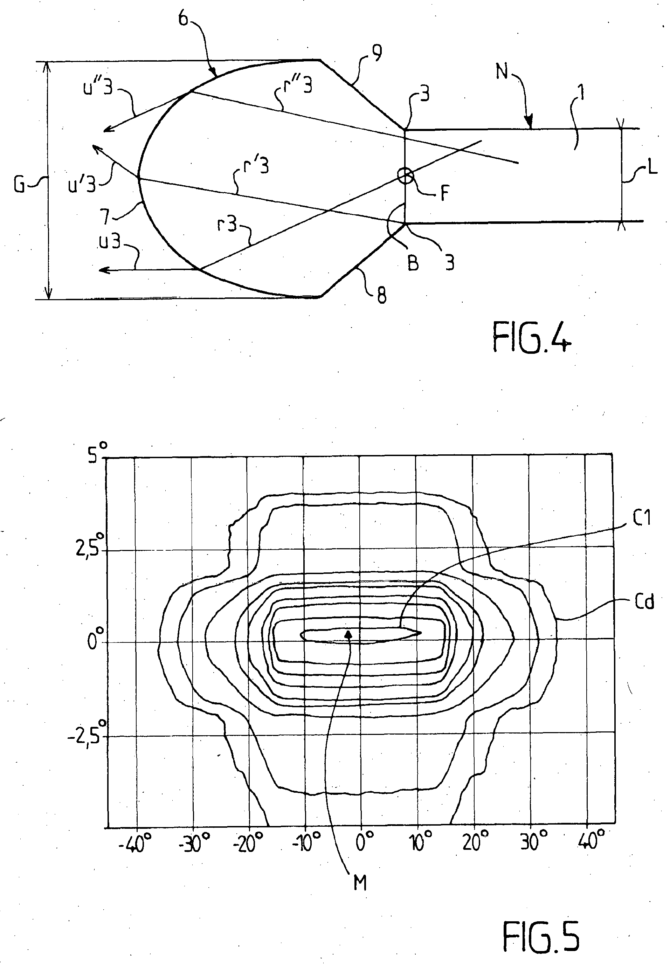

La face de sortie B est avantageusement complétée par un embout 6 plus large qui peut venir de matière avec la nappe de guidage 1, ou qui peut être rapporté au contact de la face de sortie B. Cet embout 6 présente une épaisseur G (Fig. 4) supérieure à l'épaisseur L de la nappe 1.

Dans l'exemple de Fig. 1, 3 et 4, l'embout 6 est constitué par un solide ayant une partie avant cylindrique et une partie arrière prismatique, à génératrices rectilignes orthogonales à la tranche d'entrée Ne, et donc verticales dans l'exemple considéré. La section transversale de l'embout 6 par un plan parallèle au plan de la tranche d'entrée, visible sur Fig. 4, comporte vers l'avant une partie convexe elliptique 7 définissant une lentille dont le foyer F est situé au milieu de la face de sortie B. La zone arrière de la partie elliptique 7 est prolongée par deux parois planes 8, 9 verticales, obliques convergeant vers l'arrière pour se raccorder aux arêtes verticales 3 de la face de sortie B.

Les LED de la source lumineuse émettent un faisceau selon approximativement un demi-plan. Quand le faisceau entre dans la nappe, l'ouverture du faisceau est ± β, de part et d'autre de la normale à la surface émettrice, est généralement d'environ ± 40°. La valeur de β va dépendre de l'indice de réfraction du matériau constitutif de la nappe, elle sera d'environ 38° quand la nappe est en polycarbonate PC. L'étendue du bord arrière 4 de la plaque 1 est choisie de telle sorte que l'angle γ (Fig.1) sous lequel ce bord arrière est vu depuis la source lumineuse S s'étend de part et d'autre de la normale à la source S au moins selon un angle β d'environ 40° en général, afin de récupérer un maximum du flux lumineux issu de la source.

Fig. 3 montre le principe optique du concept de base : la totalité des rayons émis par la source lumineuse entre dans la nappe 1 pour y être guidée dans la direction latérale perpendiculaire au plan de Fig. 3, puis pour y être collimatée suivant la direction de l'axe optique, dans le plan vertical de Fig. 3.

Un rayon i1 situé dans le plan de Fig. 3, émis par la source S et incliné vers l'avant par rapport à la normale à la source, présente en général un angle d'incidence sur le bord arrière 4 supérieur à l'angle de réflexion totale. Ce rayon est réfléchi selon un rayon r1 parallèle à l'axe optique.

Un rayon i2 émis par la source S vers l'arrière présente généralement un angle d'incidence inférieur à l'angle de réflexion totale. Pour assurer une réflexion, la zone inférieure Q de la tranche arrière est revêtue d'une couche réfléchissante, en particulier cette zone est aluminiée. Le rayon i2 est alors réfléchi suivant un rayon r2 parallèle à l'axe optique et au rayon r1.

On assure ainsi une collimation (c'est-à-dire un faisceau de rayons parallèles) suivant la direction de l'axe optique, dans le plan vertical.

Fig. 4 montre le profil de sortie en section par un plan horizontal. A partir de la face de sortie B, ce profil est d'abord prismatique , s'élargissant entre les faces planes 8, 9 pour permettre d'arrêter toute réflexion sur les flancs, puis prend une forme elliptique 7 pour la sortie. Tout rayon tel que r3 situé dans un plan horizontal et passant par le foyer arrière F de l'arc d'ellipse 7 sort parallèlement à l'axe optique, suivant un rayon u3. En disposant la face de sortie B de la nappe 1 au niveau du foyer F, on permet une collimation partielle des rayons sortants tels que u3 dans le plan horizontal afin de garantir en sortie un faisceau de faible largeur.

Des rayons tels que r'3 ou r"3 qui passent à côté du foyer F sortent selon des rayons u'3, ou u "3 inclinés sur l'axe optique.

L'invention se décline donc à partir d'un principe de base permettant de réaliser une fonction d'éclairage de type route, c'est-à-dire une fonction avec une intensité assez forte.

On comprend qu'avec un tel système :
- le faisceau est très peu épais, ce qui convient bien pour des faisceaux de type route, antibrouillard ou encore autoroute (« motorway » en anglais), faisceau virage additionnel (« bending light » en anglais) ou analogue ;
- la largeur du faisceau dépend de la focale et donc de la dimension de l'arc d'ellipse 7 et de l'épaisseur de la nappe 1, et donc de la longueur de la source S.

Une forte dimension G de l'embout de sortie 6 entraîne souvent des difficultés de réalisation dès lors que la pièce est moulée en matière plastique transparent. Typiquement, cette dimension G est limitée à environ 13 mm pour une pièce en matière plastique. Par contre, si la pièce est réalisée en verre des épaisseurs G plus grandes sont acceptables.

Fig. 5 illustre un réseau de courbes isolux obtenu avec une nappe de guidage 1 dont l'épaisseur est égale à 5 mm et avec une épaisseur G d'embout égale à 12,4 mm. Les courbes isolux sont obtenues sur un écran placé à 25 mètres du dispositif d'éclairage, perpendiculairement à l'axe optique dont l'intersection avec l'écran correspond à la graduation 0° selon l'axe des abscisses. L'axe vertical passant par 0° correspond à l'intersection de l'écran et du plan vertical passant par l'axe optique.

L'axe des abscisses est gradué en degrés d'angle de part et d'autre de l'axe vertical et de l'axe optique. L'axe des ordonnées est gradué en degrés d'angle au-dessus et au-dessous du plan horizontal passant par l'axe des abscisses.

Le point M est situé au voisinage de la croisée entre les axes horizontal et vertical., et correspond au point du faisceau dont l'éclairement est maximum. Ce point M est entouré par des courbes fermées de plus en plus grandes, d'allure rectangulaire pour les plus proches de M, correspondant à des éclairements de moins en moins forts. Chaque courbe correspond à une valeur constante en lux qui décroît du point M vers l'extérieur. Dans le cas de Fig.5, le point M correspond à 20,8 lux ; la première courbe fermée C1 entourant M correspond à 19,2 lux,

Le faisceau de Fig. 5 peut convenir à une fonction de type route très large, quatre à cinq dispositifs ou modules identiques étant alors nécessaires pour assurer la fonction complète. L'efficacité (définie par le rapport entre l'énergie lumineuse recueillie et l'énergie émise par la source) est bonne, de l'ordre de 50.5 %. Seule la portée (qui dépend de la valeur en lux du point M) est faible et nécessite de placer quatre à cinq modules identiques les uns à côté des autres pour assurer la fonction d'éclairage route complète.

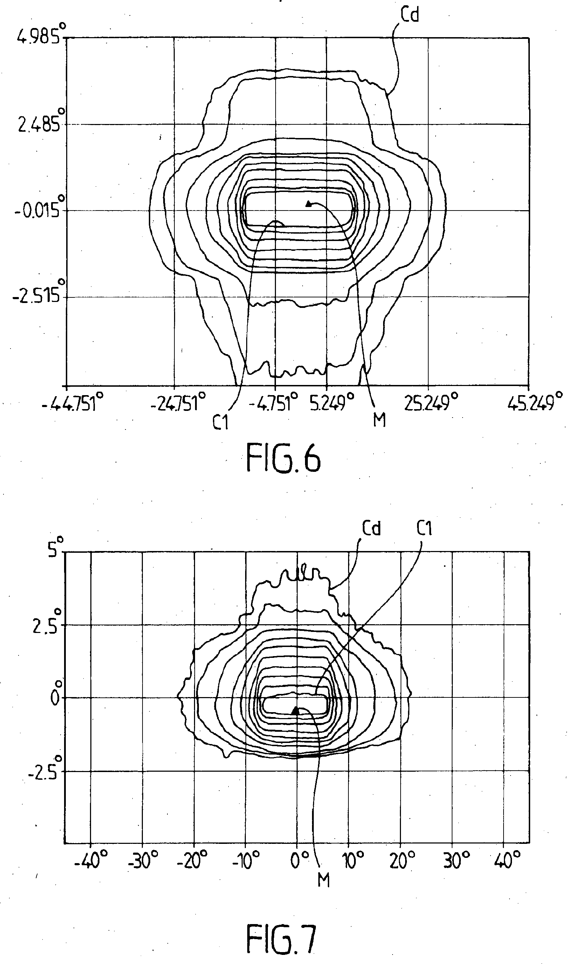

Fig. 6 est un réseau de courbes isolux semblable à celui de Fig. 5 mais obtenu avec un embout 6 d'épaisseur G plus forte, égale à 18 mm, alors que l'épaisseur de la nappe 1 reste égale à 5 mm.

Dans le cas de Fig.6, le point M correspond à 28 lux ; la première courbe fermée C1 entourant M correspond à 22 lux.

L'efficacité est de 52,5 %.

Le faisceau de Fig. 6 convient encore mieux pour la fonction route que celui de Fig. 5. L'intensité maximale a été améliorée, l'efficacité est stable. Trois ou quatre modules identiques juxtaposés seront suffisants pour donner un faisceau de très bonne qualité.

Fig. 7 est un réseau de courbes isolux obtenu avec une nappe de guidage 1 dont l'épaisseur L est égale à 2 mm, tandis que l'épaisseur G de l'embout 6 est de 12 mm.

Dans le cas de Fig.7, le point M correspond à 24 lux; la première courbe fermée C1 entourant M correspond à 22 lux,.

L'efficacité est de 61.2 %.

Le faisceau de Fig.7 convient également pour une fonction de type route. L'efficacité a été améliorée et l'intensité maximale reste importante. Quatre modules identiques sont nécessaires pour assurer la fonction route. Mais comme chaque source lumineuse de chaque module émet sensiblement deux fois moins de flux que dans les configurations des Fig. 5 et 6 (l'épaisseur de la nappe est plus faible dans le cas de Fig. 7), le flux total requis est deux fois moindre, d'où un coût réduit et plus de facilité pour refroidir chaque LED.

Concernant la forme de l'embout 6, des réflexions totales ont été constatées au niveau du dioptre de forme elliptique 7. Il est avantageux de conformer ce profil 7 selon un profil "pseudo-elliptique" qui permet à la fois de collimater la lumière dans le plan horizontal et d'autoriser une légère divergence des rayons lumineux sortants dès que le risque de réflexion totale est atteint.

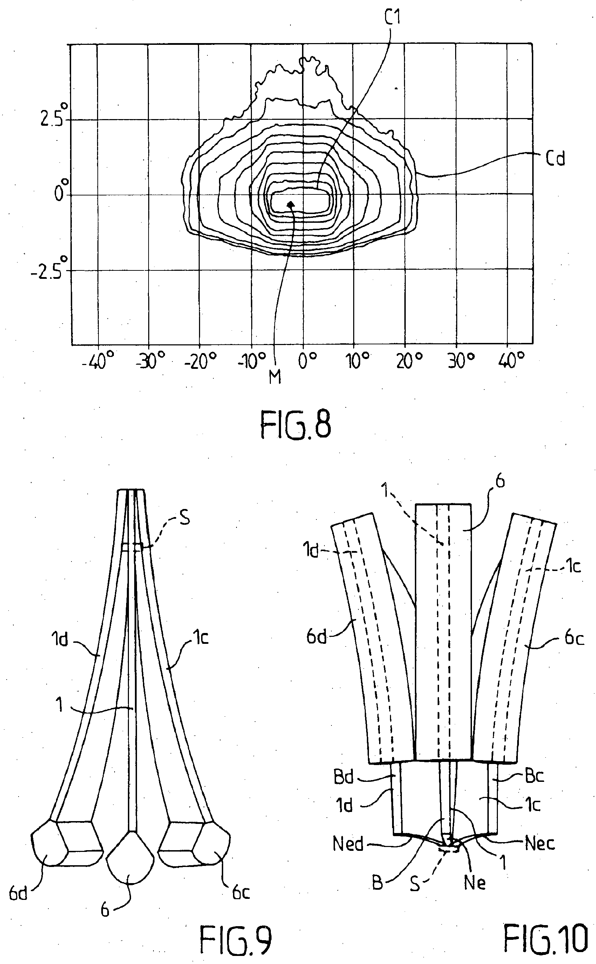

Fig. 8 illustre le réseau de courbes isolux obtenu dans les mêmes conditions que pour Fig. 7, à l'exception de l'embout 6 qui, au lieu de présenter un contour 7 strictement elliptique, présente une forme de sortie complexe correspondant à un contour pseudo-elliptique. L'efficacité est améliorée à 67.2 %, avec un éclairement maximum de 25 lux.

Dans le cas de Fig.8, le point M correspond à 25 lux ; la première courbe fermée C1 entourant M correspond à 22 lux,.

La configuration de base présente un avantage lorsque la taille des émetteurs (sources lumineuses) est faible. L'optimum se situe pour des émetteurs de dimensions 2 x 1 mm et fournissant de 200 à 250 lumens.

A défaut de telles sources, on peut conserver des LED à quatre ou cinq puces mais sur lesquelles on vient placer plusieurs nappes de guidage adjacentes.

Fig. 9 illustre, en vue de dessus, une disposition avec trois nappes de guidage 1, 1c, 1d jointives qui sont tangentes au niveau de la, ou des, LED formant source lumineuse S, ce qui permet de récolter tout le flux émis. La somme des épaisseurs des trois nappes au-dessus de la, ou des, LED est au moins égale à la longueur de l'émetteur disposée perpendiculairement aux tranches d'entrée des nappes.

Pour éviter qu'une nappe interfère avec sa voisine au niveau des embouts 6, 6c, 6d, on prévoit une nappe centrale 1 située dans un plan vertical et, de chaque côté, une nappe 1c, 1d délimitée par des zones de surface sphérique parallèles s'écartant en sens contraire de la nappe centrale 1.

Fig. 10 montre le dispositif ou module de Fig.9 en vue de face. Les embouts 6c, 6d sont tangents à l'embout central 6 en partie basse et s'écartent progressivement de l'embout central 6 vers le haut.

La partie inférieure des embouts 6, 6c, 6d est située plus haut que les tranches d'entrée N,e, Nec, Ned des nappes 1, 1 c, 1d et que la source S. En effet, il n'y a pas de rayons lumineux provenant de la source dans la partie basse des faces de sortie de sorte que la présence d'embouts n'est pas utile dans cette partie.

L'embout central 6 est de même nature que ceux utilisés dans les exemples de réalisation des Fig. 1 ou 3. Les embouts latéraux 6c, 6d sont calculés pour privilégier l'envoi de lumière dans l'axe mais en évitant les risques de perte de flux en raison d'une réflexion totale.

Fig. 10 fait apparaître le style très original obtenu sous la forme de "tiges" correspondant aux embouts 6, 6c, 6d avec une largeur très acceptable, et une hauteur également acceptable.

Fig. 11 illustre le réseau de courbes isolux obtenu avec un dispositif d'éclairage selon Fig. 9 et 10, ce réseau présentant les caractéristiques souhaitées pour un faisceau route.

Dans le cas de Fig.11, le point M correspond à45 lux; la première courbe fermée C1 entourant M correspond à 22 lux.

L'efficacité est de 70 %.Dans le cas où l'on peut utiliser des LED donnant un flux d'environ 500 lumens, seuls deux modules identiques sont nécessaires pour remplir la fonction avec de bons résultats.

Les faisceaux lumineux obtenus avec les dispositifs d'éclairage décrits jusqu'à présent ne comportent pas de coupure, c'est-à-dire une frontière entre une zone claire et une zone obscure pour éviter les éblouissements de conducteurs ou de personnes venant en sens inverse du véhicule considéré. Une telle coupure est indispensable dans des faisceaux lumineux destinés à assurer des fonctions telles que : code, antibrouillard, additionnel autoroute (additionnel motorway), additionnel virage, additionnel code pluie, et analogues.

Une coupure peut être réalisée en disposant la source lumineuse S de telle manière que le foyer Fp de la parabole constituant le bord arrière 4 soit situé sur le bord arrière de la source S au lieu d'être situé au centre de cette source.

Avec une telle disposition, comme illustré sur Fig. 12, un rayon lumineux i4 provenant du bord arrière de la source lumineuse et donc du foyer Fp, est réfléchi suivant un rayon r4 parallèle à l'axe de la parabole et à la tranche d'entrée Ne. Dans l'exemple considéré le rayon r4 est horizontal. Il restera dans un plan horizontal à la sortie du dispositif.

Tous les autres rayons lumineux émis par la source proviendront de points situés en avant du bord arrière de la source, comme le rayon i5. Ce rayon i5 est réfléchi suivant un rayon r5 descendant.

Un autre rayon i6 provenant du bord arrière sera réfléchi suivant un rayon r6 horizontal tandis qu'un autre rayon i7 provenant d'un point situé en avant du bord arrière sera réfléchi selon r7 dirigé vers le bas.

Le faisceau obtenu présentera donc une ligne de coupure horizontale avec une zone éclairée au-dessous de cette ligne de coupure et une zone obscure au-dessus.

Dans les exemples de réalisation précédents, la face de sortie avant B de la nappe reste plane, verticale selon les modes de réalisation envisagés, et l'embout 6 comporte des génératrices rectilignes.

Pour des raisons de compacité et/ou de style, il peut être souhaitable de proposer une alternative selon laquelle la face avant du dispositif d'éclairage a une forme convexe vers l'avant dans le plan de la nappe, généralement dans un plan vertical.

Un exemple simple de cette configuration est illustré par Fig. 13. La face de sortie de la nappe 1 a est convexe vers l'avant, dans le plan vertical, selon un profil elliptique 3a dont les paramètres sont déterminés par l'indice optique de la nappe. Ce profil elliptique 3a admet un foyer arrière F'.

Le bord ou face arrière 4a de la nappe 1 a présente un profil hyperbolique tournant sa convexité vers l'arrière. Ce profil admet un premier foyer F situé sur la source lumineuse S, par exemple en son centre, et un deuxième foyer confondu avec celui F' du profil 3a. Un rayon i8, i9 provenant du foyer F et tombant sur le bord arrière 4a est réfléchi selon un rayon r8, r9 qui semble venir du foyer virtuel F' qui est l'image de F donnée par le bord arrière 4a. Les rayons r8, r9 qui semblent provenir de F', foyer du profil elliptique 3a, vont sortir de la nappe 1a suivant des rayons u8, u9 horizontaux parallèles à l'axe optique.

Il est possible de combiner le profil elliptique vertical 3a avec un profil horizontal également elliptique, mais ayant des paramètres différents, pour former une surface de sortie qui convient pour la répartition d'éclairement souhaitée.

On peut noter que, dans cet exemple de réalisation, les angles de réflexion sur la face arrière 4a hyperbolique ont des valeurs nettement supérieures au cas d'une face arrière parabolique, ce qui permet de conserver plus facilement une réflexion totale et donc de limiter, voire de supprimer, la zone aluminiée de la partie arrière. Il en résulte deux avantages : d'une part, le processus d'aluminiage coûteux n'est plus nécessaire et, d'autre part, les pertes au niveau de la réflexion deviennent négligeables.

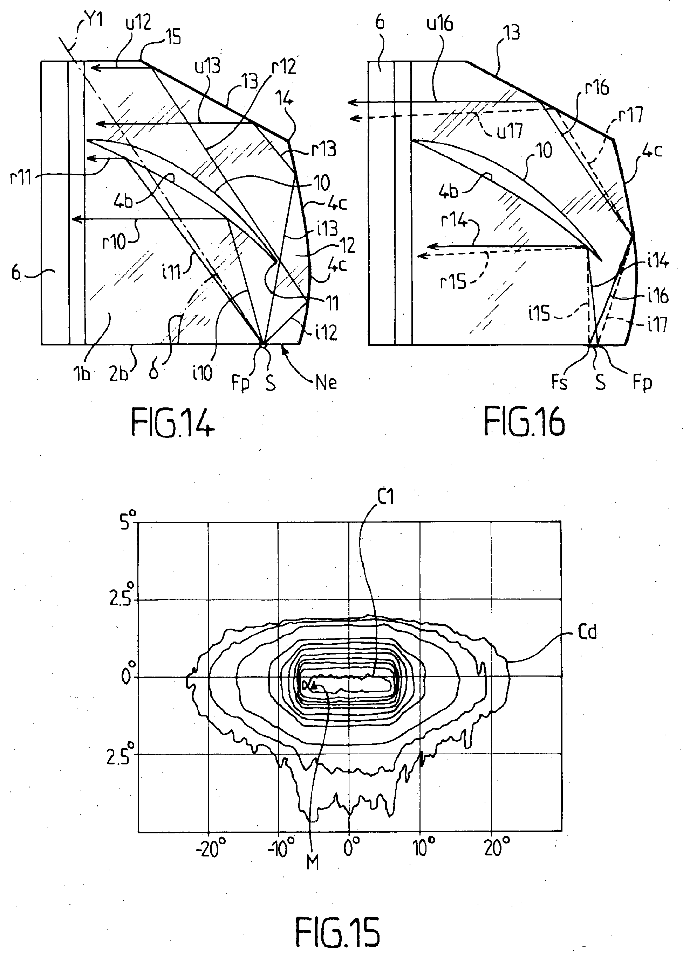

En se reportant à Fig. 14, on peut voir une réalisation dans laquelle l'aluminiage est totalement supprimé sans avoir recours à un profil de sortie convexe, mais en assurant une double réflexion interne pour une partie des rayons dirigée vers l'arrière.

Le dispositif d'éclairage selon Fig. 14 comporte un embout de sortie 6 à génératrices rectilignes verticales semblable à celui des Fig. 3 et 4. La nappe de guidage 1 b comporte une ouverture traversante 10 à contour fermé, qui s'étend entre la limite arrière de l'embout 6 et une extrémité 11 séparée par une zone de matière transparente 12 de la tranche arrière 4c.

L'ouverture 10 est limitée dans sa partie inférieure par une tranche parabolique 4b dont le foyer est situé au point Fp où est placée la source lumineuse S, et dont l'axe géométrique (qui constitue l'axe optique) est confondu avec l'axe longitudinal de la tranche d'entrée 2b. Le profil supérieur de l'ouverture 10 est choisi de manière à pouvoir être facilement contourné par les rayons lumineux émis vers l'arrière par la source.

Des rayons lumineux tels que i10, i11 émis par la source et rencontrant le dioptre formé par la tranche 4b sont réfléchis suivant des rayons r10 et r11 parallèles à la tranche d'entrée Ne.

Des rayons tels que i12, i13 émis vers l'arrière rencontrent le dioptre formé par la tranche arrière 4c. Selon la réalisation de Fig. 14, le profil de la tranche 4c est un arc de parabole admettant pour foyer le point Fp, et pour axe la droite Y1 (qui passe par Fp) relevée vers l'avant.

Les rayons i12 et i13 subissent sur la tranche arrière 4c une réflexion interne et sont renvoyés suivant des rayons r12 et r13 parallèles à l'axe Y1. La direction relevée de l'axe Y1 est choisie de façon qu'aucun rayon réfléchi tel que r12, r13 ne passe sous la parabole principale de la tranche 4b.

Le bord arrière de la nappe 1 b comporte en partie haute une section rectiligne 13 montant de l'arrière vers l'avant. L'intersection de la tranche arrière 4c et de la section 13 est désignée par la référence 14. L'extrémité haute de la section 13 est formée par son intersection 15 avec le bord supérieur horizontal de la nappe 1 b. L'inclinaison de la section 13 est choisie pour que les rayons r12, r13 soient réfléchis selon des rayons u12 et u13 parallèles à la tranche d'entrée Ne, c'est-à-dire horizontaux selon la représentation de Fig. 14. La section rectiligne 13 est parallèle à la bissectrice de l'angle δ formé entre l'axe Y1 et la direction de la tranche d'entrée Ne.

La disposition de Fig. 14, faisant intervenir deux réflexions totales internes pour les rayons dirigés vers l'arrière, permet d'éviter d'aluminier une partie de la tranche arrière de la nappe 1 b ce qui entraîne une réduction du coût de production et une amélioration du rendement lumineux.

Fig. 15 montre le résultat photométrique obtenu avec un dispositif d'éclairage selon Fig. 14 à comparer avec les courbes isolux de Fig. 7. Selon les résultats de Fig. 15, pour le même type de source lumineuse que sur Fig. 7, le flux lumineux du faisceau sortant est de 168 lumens avec une efficacité de 68 %, contre 61 % dans le cas de Fig. 7. Le maximum d'intensité atteint 19 000 candelas, pour un éclairement maximum de 30,5 lux contre 24,6 lux dans le cas de Fig. 7.

Sur Fig.15, le point M correspond à 30,5 lux; la première courbe fermée C1 entourant M correspond à 29 lux.

On notera que les remarquables améliorations des performances avec le dispositif de Fig. 14 sont principalement liées à l'absence d'aluminiage qui crée des pertes de 20 % environ pour une partie des rayons.

Des variantes de réalisation du dispositif de Fig. 14 sont possibles.

Au lieu de former les deux réflexions internes avec une première réflexion sur une face parabolique 4c puis une deuxième réflexion sur une face droite 13, on peut aussi bien utiliser :
- une face droite puis une deuxième face parabolique;
- ou une face elliptique puis une face parabolique;
- ou une face hyperbolique puis une face parabolique.

Comme dans le cas de Fig. 13, on peut également avoir une face de sortie convexe. L'association des deux réflexions internes doit alors tenir compte de cette face de sortie convexe.

Dans le cas où deux réflexions internes sont prévues avec un dispositif du type de celui de Fig. 14, la formation d'un faisceau à coupure reste toujours possible.

Pour les rayons qui subissent une seule réflexion interne sur la parabole principale de la tranche 4b, il convient que cette parabole principale ait son foyer Fp situé sur le bord arrière de la source S comme pour Fig. 12.

Par contre, pour les rayons qui subissent deux réflexions internes et qui rencontrent la parabole secondaire de la tranche 4c puis la section rectiligne 13, il convient que la parabole secondaire ait son foyer Fs situé sur le bord avant de la source lumineuse S. Fig. 16 illustre une telle disposition.

Un rayon i14 émis depuis le foyer Fp sur le bord arrière de la source est réfléchi par la parabole principale 4b suivant un rayon r14 horizontal. Un rayon i15 émis par le bord avant de la source, situé en avant du foyer Fp, est réfléchi suivant un rayon descendant r15.

Un rayon i16 provenant du foyer Fs de la parabole secondaire 4c est réfléchi suivant le rayon r16 qui est lui-même réfléchi par la face supérieure droite 13 selon un rayon horizontal u16. Par contre un rayon i17 provenant du bord arrière de la source sera réfléchi suivant un rayon r17 et selon un rayon descendant u17 en sortie. Dans tous les cas, on obtient une coupure puisque les rayons sortent suivant une direction horizontale ou suivant une direction descendante.

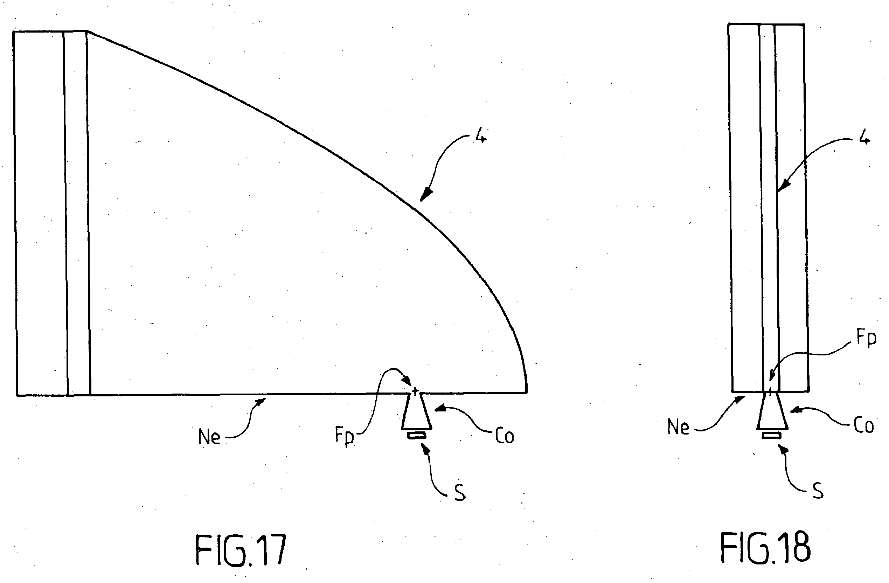

Les figures 17 et 18 se rapportent à une variante de l'exemple montré à la figure 3 notamment. Dans cette variante, la source S n'est plus accolée à la tranche Ne : la source se trouve légèrement déportée, et on a placé un conduit optique Co entre la source et la tranche Ne au niveau du foyer de la parabole. Lorsque la source possède une dimension trop importante, on a avantage, comme représenté, à ce que ce composant Co présente une conicité. On crée ainsi une source lumineuse secondaire, qui comprend sensiblement le même flux que la source S principale, mais qui est plus petite. Cette conicité va néanmoins induire un certain élargissement de l'ouverture des rayons dans la nappe. Dans le cas de la figure 17, la conicité est réalisée suivant une direction axiale, ce qui entraîne une augmentation de l'angle β d'ouverture des rayons dans la nappe, ce qu'on peut compenser/gérer en augmentant l'angle γ sous lequel le réflecteur arrière est vu depuis la source secondaire.

La figure 18 peut être considérée comme une autre vue de la variante selon la figure 17. Elle correspond aussi à une seconde variante, où la conicité du conduit Co se fait dans une direction transverse à la nappe. L'ouverture transverse des rayons dans la nappe est augmentée, ce qui est acceptable tant que la limite de réflexion totale n'est pas atteinte.

On peut sans difficulté associer à la fois la configuration des figures 17 et 18 en ayant un conduit Co qui combine une conicité à la fois axiale et transverse

Un dispositif conforme à l'invention présente de nombreux avantages, dont les suivants :
- faible compacité, notamment en largeur ;
- performance améliorée, notamment au point de vue efficacité lumineuse ;
- grande souplesse : on peut utiliser divers types de sources avec une, deux, trois, quatre ou cinq puces ;
- faisabilité industrielle, le dispositif pouvant être moulé d'une seule pièce ou, en variante l'embout 6, 6c, 6d pouvant être rapporté en extrémité de la nappe 1, 1a, 1b, 1c, 1 d.

Dans les exemples décrits un embout 6, 6a, 6b est prévu en extrémité de sortie de la nappe de guidage.

## Revendications

1. Dispositif d'éclairage ou de signalisation, pour véhicule automobile, présentant un axe optique (Ox) et comportant au moins une source lumineuse (S) et au moins un guide (N) des rayons lumineux entre la source et une face de sortie (B), le guide présentant une tranche d'entrée (Ne) associée à la source,
**caractérisé en ce que** :
- le guide (N) des rayons lumineux est formé par une nappe (1, 1a, 1b, 1c, 1d),
- et la nappe comporte un bord arrière (4, 4a, 4b, 4c) courbe convexe vers l'arrière, propre à assurer une réflexion des rayons lumineux vers la face de sortie,
la forme courbe du bord arrière (4, 4a, 4b) étant associée au profil de la face de sortie (B) pour que les rayons lumineux sortants aient une direction contenue dans un plan (π) substantiellement horizontal et contenant l'axe optique (Ox) dudit dispositif,
et **en ce qu'**il comporte un embout (6) prolongeant la face de sortie (B) et présentant, en section par un plan parallèle à la tranche d'entrée (Ne), une forme convexe (7) elliptique ou pseudo-elliptique de lentille convergente permettant de collimater au moins partiellement la lumière dans un plan sensiblement parallèle à la tranche d'entrée (Ne),
l'embout étant constitué par un solide ayant une partie avant cylindrique et une partie arrière prismatique, à génératrices rectilignes orthogonales à la tranche d'entrée, et le foyer de la lentille étant situé au milieu de la face de sortie.

2. Dispositif selon la revendication précédente, **caractérisé en ce que** la face de sortie (B) s'étend transversalement à, ou obliquement par rapport à, la tranche d'entrée (Ne).

3. Dispositif selon l'une des revendications précédentes, **caractérisé en ce que** la nappe (1, 1a, 1b, 1c, 1d) est comprise entre deux grandes faces parallèles entre elles.

4. Dispositif selon l'une des revendions précédentes, **caractérisé en ce que** la source lumineuse (S) présente une grande dimension qui est disposée sensiblement perpendiculairement à la direction longitudinale de la tranche d'entrée, l'épaisseur (L) de la nappe étant au moins égale à la grande dimension de la source pour la recouvrir complètement.

5. Dispositif selon l'une quelconque des revendications précédentes, **caractérisé en ce que** la source lumineuse est formée par plusieurs diodes électroluminescentes (LED) alignées sensiblement perpendiculairement à la direction longitudinale de la tranche d'entrée (Ne).

6. Dispositif selon l'une quelconque des revendication précédentes, **caractérisé en ce que** la face de sortie (B) est située dans un plan sensiblement orthogonal à l'axe optique (Ox) et le bord arrière (4, 4b) a une forme parabolique admettant un foyer (Fp) situé sur la source lumineuse (S).

7. Dispositif selon la revendication 6, **caractérisé en ce que** la nappe (1, 1a,1b) est plane, et disposée verticalement, horizontalement ou de façon oblique

8. Dispositif selon l'une quelconque des revendications précédentes, **caractérisé en ce qu'**il comprend plusieurs nappes accolées (1, 1c, 1d), les nappes étant jointives au-dessus de la source (S), et s'écartant progressivement pour permettre de juxtaposer des embouts (6,6c,6d) de sortie.

9. Dispositif selon l'une des revendications 1 à 7, **caractérisé en ce qu'**il comprend trois nappes accolées (1,1c,1d) à savoir une nappe centrale plane (1) comprise entre deux nappes latérales (1c,1d) limitées par des portions de surfaces sphériques.

10. Dispositif selon la revendication 6, dans lequel la tranche d'entrée (Ne) est dans un plan horizontal et la face de sortie (B) est verticales, **caractérisé en ce que** le foyer (Fp) du bord arrière parabolique (4) est situé sur le bord arrière de la source (S) de sorte que les rayons sortants sont horizontaux (r4, r6) ou se dirigent vers le bas (r5, r7) au-dessous d'une ligne de coupure.

11. Dispositif selon l'une quelconque des revendications précédentes, **caractérisé en ce que** le profil (3a) de la face de sortie est convexe vers l'avant tandis que le profil du bord arrière (4a) est associé pour une sortie des rayons parallèle à l'axe optique (Ox).

12. Dispositif d'éclairage selon la revendication 11, **caractérisé en ce que** le profil (3a) de la face de sortie est elliptique convexe vers l'avant, tandis que le bord arrière (4a) est convexe vers l'arrière en forme d'arc d'hyperbole dont un premier foyer est confondu avec le foyer (F) du profil elliptique (3a) et dont le deuxième foyer (F') correspond à l'image virtuelle du premier foyer (F) donnée par le bord arrière (4a).

13. Dispositif selon l'une quelconque des revendications précédentes, **caractérisé en ce que** :
- la nappe (1b) comporte une ouverture traversante (10) à contour fermé, limitée dans sa partie Inférieure par une tranche parabolique (4b) dont le foyer (Fp) est situé au point où est placée la source lumineuse, et dont l'axe géométrique est confondu avec l'axe optique (Ox), le profil supérieur de l'ouverture (10) étant choisi de manière à pouvoir être contourné par les rayons lumineux émis vers l'arrière, et
- pour assurer une double réflexion Interne des rayons (112, 113) se dirigeant vers l'arrière, le bord arrière de la nappe (1 b) comporte une première partie (4c) à réflexion totale et une deuxième partie (13) également à réflexion totale renvoyant les rayons parallèlement à la tranche d'entrée (Ne).

14. Dispositif selon la revendication 13, **caractérisé en ce que** la première partie (4c) du bord arrière de la nappe est formée par une parabole secondaire dont le foyer est confondu avec celui (Fp) de la tranche parabolique (4b), mais dont l'axe (Y1) est dirigé vers le haut, tandis que la deuxième partie du bord arrière est formée par une face supérieure droite (13).

15. Dispositif d'éclairage selon l'une quelconque des revendications précédentes, **caractérisé en ce que** l'angle (γ) sous lequel le bord arrière (4) de la nappe est vu depuis la source lumineuse (S) s'étend de part et d'autre de la normale à la source au moins selon un angle (β) égal ou supérieur à 30°, notamment 35° ou 40'.

16. Dispositif selon l'une des revendications précédentes, **caractérisé en ce qu'**est Interposé entre la source (S° et la tranche d'entrée (Ne) de la nappe au moins un élément optique (Co) du type conduit optique, collecteur optique.

## Patentansprüche

1. Beleuchtungs- oder Signalgebungsvorrichtung für Kraftfahrzeuge, mit einer optischen Achse (Ox) und mit wenigstens einer Lichtquelle (S) und wenigstens einem Lichtleiter (N) zwischen der Lichtquelle und einer Austrittsfläche (B), wobei der Lichtleiter einen der Lichtquelle zugeordneten Eintrittsabschnitt (Ne) aufweist,
**dadurch gekennzeichnet, dass**:
- der Lichtleiter (N) von einer Fläche (1, 1a, 1b, 1c, 1d) gebildet ist,
- und die Fläche einen nach hinten konvex gebogenen hinteren Rand (4, 4a, 4b, 4c) aufweist, der eine Reflexion der Lichtstrahlen zur Austrittsfläche zu gewährleisten vermag,
wobei die gebogene Form des hinteren Rands (4, 4a, 4b) dem Profil der Austrittsfläche (B) zugeordnet ist, damit die austretenden Lichtstrahlen eine Richtung haben, die in einer Ebene (π) liegt, die im Wesentlichen horizontal ist und die optische Achse (Ox) der Vorrichtung umfasst,
und dass sie ein die Austrittsfläche (B) verlängerndes Endstück (6) aufweist, das im Schnitt durch eine zum Eintrittsabschnitt (Ne) parallele Ebene die elliptische oder pseudo-elliptische konvexe Form (7) einer Sammellinse hat, wodurch das Licht wenigstens zum Teil in einer zum Eintrittsabschnitt (Ne) im Wesentlichen parallelen Ebene kollimiert werden kann,
wobei das Endstück von einem Festkörper mit einer zylindrischen Vorderseite und einer prismatischen Rückseite mit zum Eintrittsabschnitt orthogonalen geraden Erzeugenden gebildet ist, und wobei der Brennpunkt der Linse in der Mitte der Austrittsfläche liegt.

2. Vorrichtung nach dem vorhergehenden Anspruch,
**dadurch gekennzeichnet, dass** die Austrittsfläche (B) quer oder schräg zum Eintrittsabschnitt (Ne) verläuft.

3. Vorrichtung nach einem der vorhergehenden Ansprüche,
**dadurch gekennzeichnet, dass** die Fläche (1, 1a, 1b, 1c, 1d) zwischen zwei zueinander parallelen Breitseiten liegt.

4. Vorrichtung nach einem der vorhergehenden Ansprüche,
**dadurch gekennzeichnet, dass** die Lichtquelle (S) eine große Abmessung aufweist, die im Wesentlichen rechtwinklig zur Längsrichtung des Eintrittsabschnitts angeordnet ist, wobei die Dicke (L) der Fläche wenigstens der großen Abmessung der Lichtquelle entspricht, um sie vollständig zu verdecken.

5. Vorrichtung nach einem der vorhergehenden Ansprüche,
**dadurch gekennzeichnet, dass** die Lichtquelle von mehreren Leuchtdioden (LED) gebildet ist, die im Wesentlichen rechtwinklig zur Längsrichtung des Eintrittsabschnitts (Ne) aufgereiht sind.

6. Vorrichtung nach einem der vorhergehenden Ansprüche,
**dadurch gekennzeichnet, dass** die Austrittsfläche (B) in einer zur optischen Achse (Ox) im Wesentlichen orthogonalen Ebene liegt und der hintere Rand (4, 4b) eine parabolische Form hat, die einen auf der Lichtquelle (S) liegenden Brennpunkt (Fp) aufweist.

7. Vorrichtung nach Anspruch 6,
**dadurch gekennzeichnet, dass** die Fläche (1, 1a, 1b) eben ist und senkrecht, waagerecht oder schräg angeordnet ist.

8. Vorrichtung nach einem der vorhergehenden Ansprüche,
**dadurch gekennzeichnet, dass** sie mehrere aneinandergefügte Flächen (1, 1c, 1d) umfasst, wobei die Flächen über der Lichtquelle (S) aneinanderstoßen und sich allmählich voneinander entfernen, um die Austrittsendstücke (6, 6c, 6d) aneinandergereiht anordnen zu können.

9. Vorrichtung nach einem der Ansprüche 1 bis 7,
**dadurch gekennzeichnet, dass** sie drei aneinandergefügte Flächen (1, 1c, 1d) umfasst, nämlich eine mittlere ebene Fläche (1) zwischen zwei seitlichen Flächen (1c, 1d), die von Kugelflächenabschnitten begrenzt sind.

10. Vorrichtung nach Anspruch 6, bei der der Eintrittsabschnitt (Ne) in einer waagerechten Ebene liegt und die Austrittsfläche (B) senkrecht ist,
**dadurch gekennzeichnet, dass** der Brennunkt (Fp) des parabolischen hinteren Rands (4) auf dem hinteren Rand der Lichtquelle (S) liegt, derart, dass die austretenden Strahlen waagerecht (r4, r6) sind oder nach unten (r5, r7) unter eine Hell-Dunkel-Begrenzungslinie gelenkt werden.

11. Vorrichtung nach einem der vorhergehenden Ansprüche,
**dadurch gekennzeichnet, dass** das Profil (3a) der Austrittsfläche nach vorne konvex ist, während das Profil des hinteren Rands (4a) einem zur optischen Achse (Ox) parallelen Austritt der Strahlen zugeordnet ist.

12. Vorrichtung nach Anspruch 11,
**dadurch gekennzeichnet, dass** das Profil (3a) der Austrittsfläche nach vorne konvex elliptisch ist, während der hintere Rand (4a) nach hinten konvex in Form eines Hyperbelbogens ist, bei dem ein erster Brennpunkt mit dem Brennpunkt (F) des elliptischen Profils (3a) zusammenfällt und bei dem der zweite Brennpunkt (F') dem durch den hinteren Rand (4a) erzeugten virtuellen Bild des ersten Brennpunks (F) entspricht.

13. Vorrichtung nach einem der vorhergehenden Ansprüche,
**dadurch gekennzeichnet, dass**
- die Fläche (1b) eine durchgehende Öffnung (10) mit geschlossenem Umriss aufweist, die in ihrem unteren Teil durch einen Parabolabschnitt (4b) begrenzt ist, dessen Brennpunkt (Fp) an der Stelle liegt, an der die Lichtquelle angeordnet ist, und dessen geometrische Achse mit der optischen Achse (Ox) zusammenfällt, wobei das obere Profil der Öffnung (10) so gewählt ist, dass die nach hinten emittierten Lichtstrahlen dieses umgehen können, und
- der hintere Rand der Fläche (1b) einen ersten Abschnitt (4c) mit Totalreflexion und einen zweiten Abschnitt (13) ebenfalls mit Totalreflexion umfasst, die die Strahlen parallel zum Eintrittsabschnitt (Ne) zurückstrahlen, um eine interne Zweifachreflexion der nach hinten gelenkten Strahlen (i12, i13) zu gewährleisten.

14. Vorrichtung nach Anspruch 13,
**dadurch gekennzeichnet, dass** der erste Abschnitt (4c) des hinteren Rands der Fläche von einer zusätzlichen Parabel gebildet ist, deren Brennpunkt mit dem (Fp) des Parabolabschnitts (4b) zusammenfällt, dessen Achse (Y1) jedoch nach oben gerichtet ist, während der zweite Abschnitt des hinteren Rands von einer geraden oberen Fläche (13) gebildet ist.

15. Vorrichtung nach einem der vorhergehenden Ansprüche,
**dadurch gekennzeichnet, dass** sich der Winkel (γ), in dem der hintere Rand (4) der Fläche von der Lichtquelle (S) aus zu sehen ist, beidseits der Normalen der Lichtquelle wenigstens in einem Winkel (β) größer oder gleich 30°, insbesondere 35° oder 40° erstreckt.

16. Vorrichtung nach einem der vorhergehenden Ansprüche,
**dadurch gekennzeichnet, dass** zwischen der Lichtquelle (S) und dem Eintrittsabschnitt (Ne) der Fläche wenigstens ein optisches Element (Co) vom Typ optischer Leiter, optischer Kollektor eingefügt ist.

## Claims

1. Lighting or signalling device for a motor vehicle, having an optical axis (Ox) and comprising at least one light source (S) and at least one guide (N) for the light rays between the source and an exit face (B), the guide having an entry edge (Ne) associated with the source, **characterised in that**:
- the light-ray guide (N) is formed by a sheet (1, 1a, 1b, 1c, 1d),
- and the sheet comprises a curved rear edge (4, 4a, 4b, 4c) convex towards the rear, able to reflect the light rays towards the exit face,
- the curved form of the rear edge (4, 4a, 4b) being associated with the profile of the exit face (B) so that the emerging light rays have a direction contained in a substantially horizontal plane (n) containing the optical axis (Ox) of said device,
and **in that** it comprises an end piece (6) extending the exit face (B) and having, in cross section through a plane parallel to the entry edge (Ne), an elliptical or pseudo-elliptical convex form (7) of a convergent lens for at least partially collimating the light in a plane substantially parallel to the entry edge (Ne),
the end piece consisting of a solid having a cylindrical front part and a prismatic rear part, with rectilinear generatrices orthogonal to the entry edge, and the focus of the lens being situated at the middle of the exit face.

2. Device according to the preceding claim, **characterised in that** the exit face (B) extends transversely to, or obliquely with respect to, the entry edge (Ne).

3. Device according to one of the preceding claims, **characterised in that** the sheet (1, 1a, 1b, 1c, 1d) lies between two large faces parallel to each other.

4. Device according to one of the preceding claims, **characterised in that** the light source (S) has a large dimension that is disposed substantially perpendicular to the longitudinal direction of the entry edge, the thickness (L) of the sheet being at least equal to the large dimension of the source in order to cover it completely.

5. Device according to any of the preceding claims, **characterised in that** the light source is formed by a plurality of light emitting diodes (LED) aligned substantially perpendicular to the longitudinal direction of the entry edge (Ne).

6. Device according to any of the preceding claims, **characterised in that** the exit face (B) is situated in a plane substantially orthogonal to the optical axis (Ox) and the rear edge (4, 4b) has a parabolic form having a focus (Fp) situated on the light source (S).

7. Device according to claim 6, **characterised in that** the sheet (1, 1a, 1b) is planar and disposed vertically, horizontally or obliquely.

8. Device according to any of the preceding claims, **characterised in that** it comprises a plurality of sheets up against each other (1, 1c, 1d), the sheets being contiguous above the source (S) and separating gradually so as to make it possible to juxtapose exit end pieces (6, 6c, 6d).

9. Device according to one of claims 1 to 7, **characterised in that** it comprises three sheets (1, 1c, 1d) up against each other, namely a planar middle sheet (1) between two lateral sheets (1c, 1d) delimited by spherical surface portions.

10. Device according to claim 6, in which the entry edge (Ne) is in a horizontal plane and the exit face (B) is vertical, **characterised in that** the focus (Fp) of the parabolic rear edge (4) is situated on the rear edge of the source (S) so that the emerging rays are horizontal (r4, r6) or are directed downwards (r5, r7) below a cutoff line.

11. Device according to any of the preceding claims, **characterised in that** the profile (3a) of the exit face is convex towards to the front while the profile of the rear edge (4a) is associated for exit of the rays parallel to the optical axis (Ox).

12. Lighting device according to claim 11, **characterised in that** the profile (3a) of the exit face is elliptical and convex towards the front, while the rear edge (4a) is convex towards the rear in the form of an arc of a hyperbole, a first focus of which is merged with the focus (F) or the elliptical profile (3a) and the second focus (F') of which corresponds to the virtual image of the first focus (F) given by the rear edge (4a).

13. Device according to any of the preceding claims, **characterised in that**:
- the sheet (1b) has a through opening (10) with a closed contour, delimited in its bottom part by a parabolic edge (4b), the focus (Fp) of which is situated at the point where the light source is placed, and the geometric axis of which is merged with the optical axis (Ox), the top profile of the opening (10) being chosen so as to be able to have the light rays emitted towards the rear pass round it, and
- to provide a double internal reflection of the rays (i12, i13) directed towards the rear, the rear edge of the sheet (1b) comprises a first total-reflection part (4c) and a second part (13) also with total reflection returning the rays parallel to the entry edge (Ne).

14. Device according to claim 13, **characterised in that** the first part (4c) of the rear edge of the sheet is formed by a secondary parabola, the focus of which is merged with the focus (Fp) of the parabolic edge (Fp), but the axis (Y1) of which is directed upwards, while the second part of the rear edge is formed by a straight top face (13).

15. Lighting device according to any of the preceding claims, **characterised in that** the angle (γ) at which the rear edge (4) of the sheet is seen from the light source (S) extends on either side of the normal to the source at an angle (β) at least equal to or greater than 30°, in particular 35° or 40°.

16. Device according to one of the preceding claims, **characterised in that** at least one optical element (Co) of the optical pipe or optical collector type is interposed between the source (S) and the entry edge (Ne) of the sheet.
